# EUROPEAN PATENT APPLICATION

(11) **EP 4 564 940 A1**
(43) Date of publication of application: **04.06.2025**
(21) Application number: 23845307.0
(22) Date of filing: 10.07.2023
(51) Int. Cl.: H04W 52/36

(54) **METHOD AND DEVICE FOR WIRELESS COMMUNICATION**

(30) Priority: 25.07.2022 CN 202210881359
(71) Applicant: SHANGHAI LANGBO COMMUNICATION TECHNOLOGY COMPANY LIMITED, Shanghai 200240 (CN)
(72) Inventor: ZHANG, Xiaobo, Shanghai 201206 (CN)
(74) Representative: Gunzelmann, Rainer
(86) International application number: PCT/CN2023/106515
(87) International publication number: WO 2024/022094

(57) **Abstract**

The present application discloses a method and device for wireless communication. The method comprises: receiving first higher-layer signaling, wherein the first higher-layer signaling is used for determining whether at least one piece of DCI schedules a transmission waveform; and in response to receiving the first higher-layer signaling, triggering a first PHR. The present application can improve the power control performance, and maintain good compatibility with existing systems.

## Description

### TECHNICAL FIELD

The present invention relates to methods and devices in wireless communication systems, and in particular to a scheme and device for Power Headroom Reporting (PHR) in a wireless communication system.

### BACKGROUND

In existing cellular communication systems such as Long Term Evolution (LTE) or New Radio (NR), the UE (User Equipment) sends a PHR to assist the base station in uplink power control. Typical events used to trigger PHRs include timer expiration, PHR function reconfiguration, or PScell (i.e., Primary SCG Cell, where SCG refers to Secondary Cell Group) addition, etc.

In NR systems, transmission waveforms for uplink include Discrete Fourier Transform-spread-OFDM (DFT-s-OFDM) and Cyclic Prefix-Orthogonal Frequency Division Multiplexing (CP-OFDM); where DFT-s-OFDM is also known as Transform Precoding, and CP-OFDM is also known as disabled Transform Precoding.

### SUMMARY

Flexible switching between different transmission waveforms enhances coverage. The inventors have found through researches that the existing PHR schemes may require further enhancement in scenarios where flexible switching of transmission waveforms is required.

To address the above problem, the present application provides a solution. It should be noted that while a large number of embodiments of the present application are illustrated with respect to uplink transmission, the present application can also be used for sidelink transmission or transmission between relay nodes and base stations. Further, the use of a unified solution can reduce implementation complexity or improve performance. It should be noted that if no conflict is incurred, embodiments in any node in the present application and the characteristics of the embodiments are also applicable to any other node, and vice versa. What's more, the embodiments in the present application and the characteristics in the embodiments can be arbitrarily combined if there is no conflict.

The present application provides a method in a first node for wireless communications, comprising:
receiving a first higher layer signaling, where the first higher layer signaling is used to determine whether at least one DCI (Downlink Control Information) schedules a transmission waveform; and
triggering a first PHR (Power Headroom Report) as a response to receiving the first higher layer signaling.
The above method can trigger the PHR in a timelier manner, which in turn better ensures the performance of power control.

Specifically, according to one aspect of the present application, the above method is characterized in comprising:
receiving a second higher layer signaling;
herein, the second higher layer signaling comprises at least two parameter groups; the first higher layer signaling is used to determine a first parameter group from the at least two parameter groups, the first parameter group being used for PHR.

The above method can improve the flexibility, or accuracy, of PHR configuration, and better adapt to the scenario of flexible switching of transmission waveforms.

Specifically, according to one aspect of the present application, the above method is characterized in comprising:
the first transmitter, transmitting a first PHR MAC CE (i.e., Medium Access Control Control Element) as a response to a first condition set being satisfied;
herein, the first condition set comprises at least one PHR being triggered and not being terminated, the at least one PHR comprising the first PHR.

The above aspects have good compatibility.

Specifically, according to one aspect of the present application, the above method is characterized in comprising:
receiving a first DCI, the first DCI being used to indicate a transmission waveform of at least a first PUSCH (Physical Uplink Shared Channel);
herein, the first higher layer signaling is used to indicate that the at least one DCI schedules a transmission waveform; the transmission waveform of the first PUSCH is one of a set of candidate waveforms, the set of candidate waveforms including DFT-S-OFDM and CP-OFDM; and the at least one DCI includes the first DCI.

In one embodiment, the first PHR MAC CE is transmitted on the first PUSCH.

In one embodiment, the set of candidate waveforms consists of DFT-S-OFDM and CP-OFDM.

In one embodiment, the set of candidate waveforms consists of a plurality of candidate waveforms.

In one embodiment, the plurality of candidate waveforms include DFT-S-OFDM and CP-OFDM.

In one embodiment, the plurality of candidate waveforms include Filter Bank Multi Carrier (FBMC).

In one embodiment, the plurality of candidate waveforms include Sparse Code Multiple Access (SCMA).

Specifically, according to one aspect of the present application, the above method is characterized in that a search space to which the first DCI belongs is used to determine that the at least one DCI includes the first DCI.

Specifically, according to one aspect of the present application, the above method is characterized in that a DCI format of the first DCI is used to determine that the at least one DCI includes the first DCI.

Specifically, according to one aspect of the present application, the above method is characterized in that a search space to which the first DCI belongs and a DCI format of the first DCI are used to determine that the at least one DCI includes the first DCI.

The three aspects described above can increase configuration flexibility or reduce redundancy overhead in DCIs.

Specifically, according to one aspect of the present application, the above method is characterized in that the first higher layer signaling is used to determine whether the at least one DCI comprises a first field, the first field being used to schedule a transmission waveform.

The above method reduces the redundancy overhead in the DCIs and avoids the first field that is always-on.

The present application provides a method in a second node for wireless communications, comprising:
a second transmitter, transmitting a first higher layer signaling, where the first higher layer signaling is used to indicate whether at least one DCI schedules a transmission waveform;
herein, the first higher layer signaling is used for triggering a first PHR.

Specifically, according to one aspect of the present application, the above method is characterized in comprising:
transmitting a second higher layer signaling;
herein, the second higher layer signaling comprises at least two parameter groups; the first higher layer signaling is used to indicate a first parameter group from the at least two parameter groups, the first parameter group being used for PHR.

Specifically, according to one aspect of the present application, the above method is characterized in comprising:
receiving a first PHR MAC CE;
herein, as a response to a first condition set being satisfied, the first PHR MAC CE is generated; the first condition set comprises at least one PHR being triggered and not being terminated, the at least one PHR comprising the first PHR.

Specifically, according to one aspect of the present application, the above method is characterized in comprising:
transmitting a first DCI, the first DCI being used to indicate a transmission waveform of at least a first PUSCH;
herein, the first higher layer signaling is used to indicate that the at least one DCI schedules a transmission waveform; the transmission waveform of the first PUSCH is one of a set of candidate waveforms, the set of candidate waveforms including DFT-S-OFDM and CP-OFDM; and the at least one DCI includes the first DCI.

In one embodiment, the first PHR MAC CE is transmitted on the first PUSCH.

Specifically, according to one aspect of the present application, the above method is characterized in that at least one of a search space to which the first DCI belongs or a DCI format of the first DCI is used to determine that the at least one DCI includes the first DCI.

Specifically, according to one aspect of the present application, the above method is characterized in that the first higher layer signaling is used to determine whether the at least one DCI comprises a first field, the first field being used to schedule a transmission waveform.

The present application provides a first node for wireless communications, comprising:
a first receiver, receiving a first higher layer signaling, where the first higher layer signaling is used to determine whether at least one DCI (Downlink Control Information) schedules a transmission waveform; and
a first transmitter, triggering a first PHR (Power Headroom Report) as a response to receiving the first higher layer signaling.

The present application provides a second node for wireless communications, comprising:
a second transmitter, transmitting a first higher layer signaling, where the first higher layer signaling is used to indicate whether at least one DCI schedules a transmission waveform;
herein, the first higher layer signaling is used for triggering a first PHR.

### BRIEF DESCRIPTION OF THE DRAWINGS

Other features, objects and advantages of the present invention will become more apparent from the detailed description of non-restrictive embodiments taken in conjunction with the following drawings:
FIG. 1 illustrates a flowchart of triggering a first PHR according to one embodiment of the present application.
FIG. 2 illustrates a schematic diagram of a network architecture according to one embodiment of the present application.
FIG. 3 illustrates a schematic diagram of a radio protocol architecture of a user plane and a control plane according to one embodiment of the present application.
FIG. 4 illustrates a schematic diagram of hardcore modules in a communication node according to one embodiment of the present application.
FIG. 5 illustrates a flowchart of transmission between a first node and a second node according to one embodiment of the present application.
FIG. 6 illustrates a schematic diagram of a first DCI according to one embodiment of the present application.
FIG. 7 illustrates a structure block diagram of a processing device used in a first node according to one embodiment of the present application.
FIG. 8 illustrates a structure block diagram of a processing device used in a second node according to one embodiment of the present application.

### DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1

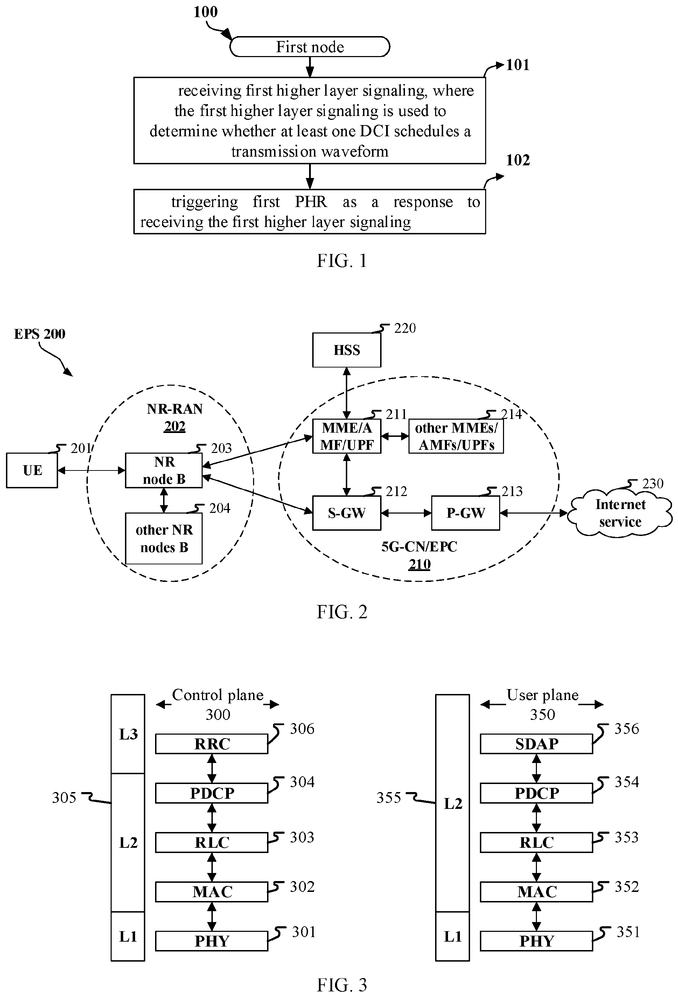

Embodiment 1 illustrates a flowchart of triggering a first PHR according to one embodiment of the present application; as shown in FIG. 1.

The first node 100 receives a first higher layer signaling in step 101, where the first higher layer signaling is used to determine whether at least one DCI schedules a transmission waveform; and triggers a first PHR in step S102 as a response to receiving the first higher layer signaling.

In one embodiment, the first higher layer signaling comprises a MAC CE.

In one embodiment, the first higher layer signaling is a Radio Resource Control (RRC) signaling.

In one embodiment, the first higher layer signaling belongs to a PUSCH-Config IE (Information Element).

In one embodiment, the first higher layer signaling belongs to a BWP-UplinkDedicated IE.

In one embodiment, the first higher layer signaling belongs to a BWP-Uplink IE.

In one embodiment, the first higher layer signaling belongs to a ServingCellConfig IE.

In one embodiment, the first higher layer signaling is used to configure a first cell and the at least one DCI is used to schedule the first cell.

In one embodiment, the at least one DCI comprises a DCI for scheduling a PUSCH on the first cell.

In one embodiment, the first higher layer signaling is used to determine whether the at least one DCI comprises a first field, the first field being used to schedule a transmission waveform.

In one embodiment, the first field explicitly indicates the transmission waveform.

In one embodiment, the first field consists of 1 bit and the first field indicates that the transmission waveform is DFT-s-OFDM or CP-OFDM.

In one embodiment, the phrase that the first higher layer signaling is used to determine whether at least one DCI schedules a transmission waveform means: the first higher layer signaling configures whether a transmission waveform on a PUSCH is dynamically switched, and when the first higher layer signaling configures the transmission waveform on the PUSCH as being dynamically switched, the first node 100 determines the transmission waveform of the PUSCH based on an indication of a first field in the DCI, and when the first higher layer signaling configures the transmission waveform on the PUSCH as not being dynamically switched, the first node 100 does not determine the transmission waveform of the PUSCH based on the first field of the DCI.

In one embodiment, when a transmission waveform on a PUSCH is configured by the first higher layer signaling as not being dynamically switched, the first node 100 determines the transmission waveform of the PUSCH based on RRC signaling.

In one subembodiment, according to the scheduling scheme for the PUSCH, the RRC signaling is an msg3-transformPrecoder, an msgA-TransformPrecoder, a transformPrecoder in pusch-Config, or a transformPrecoder in configuredGrantConfig; refer to section 6.1.3 of TS 38.214 for the specific scheme.

In one embodiment, the phrase that the first higher layer signaling is used to determine whether at least one DCI schedules a transmission waveform comprises: the first higher layer signaling is used to determine the payload size of a DCI being monitored on a first Physical Downlink Control Channel (PDCCH) candidate set, the first PDCCH candidate set comprising a plurality of PDCCH candidates.

In one embodiment, the at least one DCI is detected in the first PDCCH candidate set.

In one embodiment, the first PDCCH candidate set is on a second cell.

In one embodiment, the first PDCCH candidate set belongs to a UE-specific search space (USS).

In one embodiment, the DCI format of the at least one DCI includes DCI format 0_0 and DCI format 0_1.

In one embodiment, the DCI format of the at least one DCI includes DCI format 0_2.

The above method increases the switching frequency of the transmission waveform to better adapt to the transmission environment.

In one embodiment, the DCI format of the at least one DCI includes DCI format 0_0 and does not include DCI format 0_1 and DCI format 0_2.

The above method improves the robustness of scheduling of transmission waveforms.

In one embodiment, the first higher layer signaling reconfigures the transmission waveform on the PUSCH not being dynamically switched as the transmission waveform on the PUSCH being dynamically switched.

In one embodiment, the first higher layer signaling reconfigures the transmission waveform on the PUSCH being dynamically switched as the transmission waveform on the PUSCH not being dynamically switched.

In one embodiment, the first higher layer signaling is used to configure a PUSCH on one serving cell only.

In one embodiment, the act of triggering the first PHR is executed at the MAC layer.

In one embodiment, the reception of the first higher layer signaling is used to trigger a first set of operations, the first set of operations comprising triggering the first PHR.

In one embodiment, the first set of operations comprises applying a first parameter group, the first parameter group being used for a PHR, the first parameter group being configured by the second higher layer signaling.

In one embodiment, the second higher layer signaling is received prior to receiving the first higher layer signaling.

It shall be noted that Embodiment 1 includes scenarios where the first node 100 does not detect a DCI, e.g., where each of the at least one DCI is a PDCCH candidate in the first PDCCH candidate set, and where the first higher layer signaling is used to determine whether a DCI format monitored among those PDCCH candidates includes a first field, the first field being used to schedule the transmission waveform.

### Embodiment 2

Embodiment 2 illustrates a schematic diagram of a network architecture according to one embodiment of the present application, as shown in FIG. 2. FIG. 2 illustrates an architecture of 5G New Radio (NR), Long-Term Evolution (LTE) and Long-Term Evolution Advanced (LTE-A) systems. The 5G NR or LTE network architecture 200 may be called a 5G System/ Evolved Packet System (5GS/EPS) or other suitable terminology. The EPS 200 may comprise one UE 201, an NG-RAN 202, a Evolved Packet Core/5G-Core Network (EPC-5G-CN) 210, a Home Subscriber Server (HSS) 220 and an Internet Service 230. The EPS 200 may be interconnected with other access networks. For simple description, the entities/interfaces are not shown. As shown in FIG. 2, the EPS 200 provides packet switching services. Those skilled in the art will find it easy to understand that various concepts presented throughout the present application can be extended to networks providing circuit switching services or other cellular networks. The NG-RAN 202 comprises an NR node B (gNB) 203 and other gNBs 204. The gNB 203 provides UE 201 oriented user plane and control plane terminations. The gNB 203 may be connected to other gNBs 204 via an Xn interface (for example, backhaul). The gNB 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB 203 provides an access point of the EPC/5G-CN 210 for the UE 201. Examples of UE 201 include cellular phones, smart phones, Session Initiation Protocol (SIP) phones, laptop computers, Personal Digital Assistant (PDA), Satellite Radios, non-terrestrial base station communications, satellite mobile communications, Global Positioning Systems (GPSs), multimedia devices, video devices, digital audio players (for example, MP3 players), cameras, games consoles, unmanned aerial vehicles, air vehicles, narrow-band physical network equipment, machine-type communication equipment, land vehicles, automobiles, wearable equipment, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected to the EPC/5G-CN 210 via an S1/NG interface. The EPC/5G-CN 210 comprises a Mobility Management Entity (MME)/ Authentication Management Field (AMF)/User Plane Function (UPF) 211, other MMEs/AMFs/UPFs 214, a Service Gateway (S-GW) 212 and a Packet Date Network Gateway (P-GW) 213. The MME/AMF/UPF 211 is a control node for processing a signaling between the UE 201 and the EPC/5G-CN 210. Generally, the MME/AMF/UPF 211 provides bearer and connection management. All user Internet Protocol (IP) packets are transmitted through the S-GW 212. The S-GW 212 is connected to the P-GW 213. The P-GW 213 provides UE IP address allocation and other functions. The P-GW 213 is connected to the Internet Service 230. The Internet Service 230 comprises IP services corresponding to operators, specifically including Internet, Intranet, IP Multimedia Subsystem (IMS) and Packet Switching Streaming (PSS) services.

In one embodiment, the UE 201 corresponds to the first node in the present application, and the gNB203 corresponds to the second node in the present application.

In one embodiment, the UE201 supports the generation of CSI taking advantage of Artificial Intelligence (AI) or Deep Learning.

Typically, the generation of CSI includes compressing CSI.

In one embodiment, the UE 201 is a terminal supporting Massive-MIMO.

In one embodiment, the gNB203 supports Massive-MIMO-based transmission.

In one embodiment, the gNB203 supports the decompression of CSI taking advantage of AI or Deep Learning.

In one embodiment, the gNB 203 is a MacroCellular base station.

In one embodiment, the gNB203 is a Micro Cell base station.

In one embodiment, the gNB 203 is a PicoCell base station.

In one embodiment, the gNB203 is a Femtocell.

In one embodiment, the gNB203 is a base station supporting large time-delay difference.

In one embodiment, the gNB203 is a flight platform.

In one embodiment, the gNB203 is satellite equipment.

In one embodiment, the first node and the second node in the present application are respectively the UE201 and the gNB203.

### Embodiment 3

Embodiment 3 illustrates a schematic diagram of an embodiment of a radio protocol architecture of a user plane and a control plane according to the present application, as shown in FIG. 3. FIG. 3 is a schematic diagram illustrating an embodiment of a radio protocol architecture of a user plane 350 and a control plane 300. In FIG. 3, the radio protocol architecture for a control plane 300 between a first node (UE, or RSU in V2X, vehicle-mounted equipment or vehicle-mounted communication module) and a second node (gNB, UE, or RSU in V2X, vehicle-mounted equipment or vehicle-mounted communication module), or between two UEs is represented by three layers, which are: layer 1, layer 2 and layer 3. The layer 1 (L1) is the lowest layer which performs signal processing functions of various PHY layers. The L1 is called PHY 301 in the present application. The layer 2 (L2) 305 is above the PHY 301, and is in charge of the link between a first node and a second node as well as between two UEs via the PHY 301. The L2 305 comprises a Medium Access Control (MAC) sublayer 302, a Radio Link Control (RLC) sublayer 303 and a Packet Data Convergence Protocol (PDCP) sublayer 304. All these sublayers terminate at the second nodes. The PDCP sublayer 304 provides data encryption and integrity protection, and the PDCP sublayer 304 also provides support for inter-cell mobility of the second node between first nodes. The RLC sublayer 303 provides packet segmentation and reassembly, retransmission of a lost packet via ARQ, and it also provides duplicate packet detection and protocol error detection. The MAC sublayer 302 provides mapping between the logical and transport channels and multiplexing of logical channels. The MAC sublayer 302 is also responsible for allocating between first nodes various radio resources (i.e., resource block) in a cell. The MAC sublayer 302 is also in charge of HARQ operation. In the control plane 300, The RRC sublayer 306 in the L3 layer is responsible for acquiring radio resources (i.e., radio bearer) and configuring the lower layer using an RRC signaling between the second node and the first node. The radio protocol architecture in the user plane 350 comprises the L1 layer and the L2 layer. In the user plane 350, the radio protocol architecture used for the first node and the second node in a PHY layer 351, a PDCP sublayer 354 of the L2 layer 355, an RLC sublayer 353 of the L2 layer 355 and a MAC sublayer 352 of the L2 layer 355 is almost the same as the radio protocol architecture used for corresponding layers and sublayers in the control plane 300, but the PDCP sublayer 354 also provides header compression used for higher-layer packet to reduce radio transmission overhead. The L2 layer 355 in the user plane 350 also comprises a Service Data Adaptation Protocol (SDAP) sublayer 356, which is in charge of the mapping between QoS streams and a Data Radio Bearer (DRB), so as to support diversified traffics. Although not described in FIG. 3, the first node may comprise several upper layers above the L2 355, such as a network layer (i.e., IP layer) terminated at a P-GW 213 of the network side and an application layer terminated at the other side of the connection (i.e., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the first PHR MAC CE in the present application is generated by the MAC 302.

In one embodiment, the first higher layer signaling in the present application is generated by the RRC sublayer 306.

In one embodiment, the second higher layer signaling in the present application is generated by the RRC sublayer 306.

In one embodiment, the first DCI in the present application is generated by the PHY 301.

### Embodiment 4

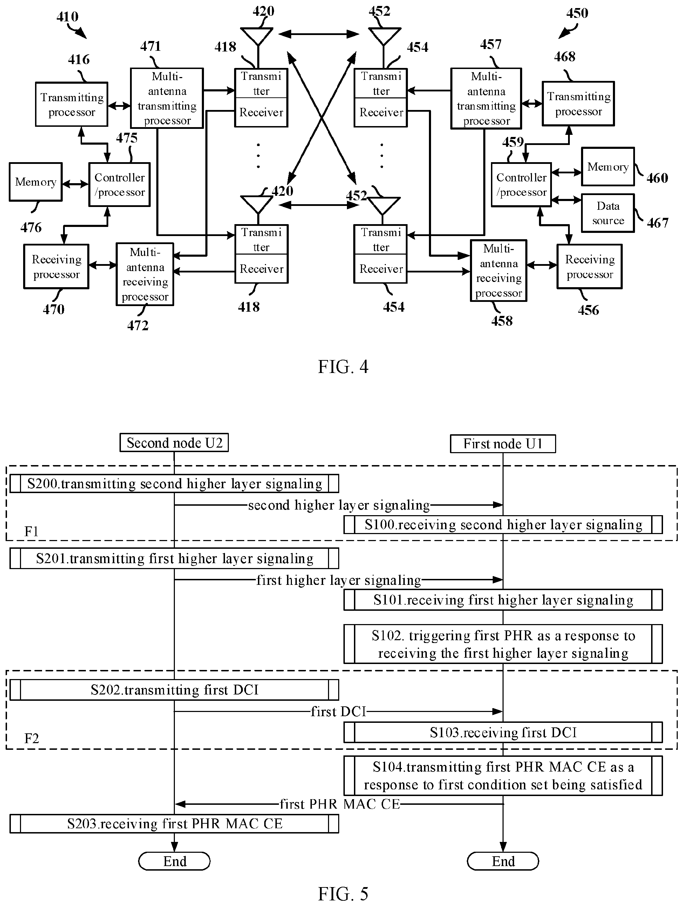

Embodiment 4 illustrates a schematic diagram of hardcore modules in a communication node according to one embodiment of the present application, as shown in FIG. 4. FIG. 4 is a block diagram of a first communication device 450 and a second communication device 410 in communication with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitter/receiver 454 and an antenna 452.

The second communication device 410 comprises a controller/processor 475, a memory 476, a receiving processor 470, a transmitting processor 416, a multi-antenna receiving processor 472, a multi-antenna transmitting processor 471, a transmitter/receiver 418 and an antenna 420.

In a transmission from the second communication device 410 to the first communication device 450, at the second communication device 410, a higher layer packet from a core network is provided to the controller/processor 475. The controller/processor 475 provides functions of the L2 layer. In the transmission from the second communication device 410 to the first communication device 450, the controller/processor 475 provides header compression, encryption, packet segmentation and reordering, and multiplexing between a logical channel and a transport channel, and radio resource allocation of the first communication device 450 based on various priorities. The controller/processor 475 is also in charge of a retransmission of a lost packet and a signaling to the first communication device 450. The transmitting processor 416 and the multi-antenna transmitting processor 471 perform various signal processing functions used for the L1 layer (i.e., PHY). The transmitting processor 416 performs channel coding and interleaving so as to ensure a Forward Error Correction (FEC) at the second communication device 410 side and the mapping to signal clusters corresponding to each modulation scheme (i.e., BPSK, QPSK, M-PSK, and M-QAM, etc.). The multi-antenna transmitting processor 471 performs digital spatial precoding, which includes precoding based on codebook and precoding based on non-codebook, and beamforming processing on encoded and modulated signals to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multicarrier symbol streams. After that the multi-antenna transmitting processor 471 performs transmission analog precoding/beamforming on the time-domain multicarrier symbol streams. Each transmitter 418 converts a baseband multicarrier symbol stream provided by the multi-antenna transmitting processor 471 into a radio frequency (RF) stream, which is later provided to different antennas 420.

In a transmission from the second communication device 410 to the first communication device 450, at the first communication device 450, each receiver 454 receives a signal via a corresponding antenna 452. Each receiver 454 recovers information modulated to the RF carrier, and converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs reception analog precoding/beamforming on a baseband multicarrier symbol stream provided by the receiver 454. The receiving processor 456 converts the processed baseband multicarrier symbol stream from time domain into frequency domain using FFT. In frequency domain, a physical layer data signal and a reference signal are de-multiplexed by the receiving processor 456, wherein the reference signal is used for channel estimation, while the data signal is subjected to multi-antenna detection in the multi-antenna receiving processor 458 to recover any first communication device 450-targeted spatial stream. Symbols on each spatial stream are demodulated and recovered in the receiving processor 456 to generate a soft decision. Then the receiving processor 456 de-interleaves and channel decodes the soft decision to recover the higher-layer data and control signal transmitted by the second communication device 410 on the physical channel. Next, the higher-layer data and control signal are provided to the controller/processor 459. The controller/processor 459 provides functions of the L2 layer. The controller/processor 459 can be associated with the memory 460 that stores program code and data; the memory 460 may be called a computer readable medium. In the transmission from the second communication device 410 to the second communication device (node) 450, the controller/processor 459 provides demultiplexing between a transport channel and a logical channel, packet reassembling, decrypting, header decompression and control signal processing so as to recover a higher-layer packet from the core network. The higher-layer packet is later provided to all protocol layers above the L2 layer. Or various control signals can be provided to the L3 for processing.

In a transmission from the first communication device 450 to the second communication device 410, at the first communication device 450, the data source 467 is configured to provide a higher-layer packet to the controller/processor 459. The data source 467 represents all protocol layers above the L2 layer. Similar to a transmitting function of the second communication device 410 described in the transmission from the second communication node 410 to the first communication node 450, the controller/processor 459 performs header compression, encryption, packet segmentation and reordering, and multiplexing between a logical channel and a transport channel based on radio resource allocation so as to provide the L2 layer functions used for the user plane and the control plane. The controller/processor 459 is also responsible for a retransmission of a lost packet, and a signaling to the second communication device 410. The transmitting processor 468 performs channel coding, interleaving and modulation and mapping, and the multi-antenna transmitting processor 457 performs digital multi-antenna spatial precoding, including precoding based on codebook and precoding based on non-codebook, and beamforming. The transmitting processor 468 then modulates generated spatial streams into multicarrier/single-carrier symbol streams. The modulated symbol streams, after being subjected to analog precoding/beamforming in the multi-antenna transmitting processor 457, are provided from the transmitter 454 to each antenna 452. Each transmitter 454 firstly converts a baseband symbol stream provided by the multi-antenna transmitting processor 457 into a radio frequency symbol stream, and then provides the radio frequency symbol stream to the antenna 452.

In a transmission from the first communication device 450 to the second communication device 410, the function of the second communication device 410 is similar to the receiving function of the first communication device 450 described in the transmission from the second communication device 410 to the first communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly provide functions of the L1 layer. The controller/processor 475 provides functions of the L2 layer. The controller/processor 475 can be associated with the memory 476 that stores program code and data; the memory 476 may be called a computer readable medium. In the transmission from the first communication device 450 to the second communication device 410, the controller/processor 475 provides de-multiplexing between a transport channel and a logical channel, packet reassembling, decrypting, header decompression, control signal processing so as to recover a higher-layer packet from the first communication device (UE) 450. The higher-layer packet coming from the controller/processor 475 may be provided to the core network.

In one embodiment, the first communication device 450 comprises at least one processor and at least one memory. The at least one memory comprises computer program codes; the at least one memory and the computer program codes are configured to be used in collaboration with the at least one processor. The first communication device 450 at least receives a first higher layer signaling, where the first higher layer signaling is used to determine whether at least one DCI (Downlink Control Information) schedules a transmission waveform; and triggers a first PHR (Power Headroom Report) as a response to receiving the first higher layer signaling.

In one embodiment, the first communication device 450 comprises a memory that stores a computer readable instruction program. The computer readable instruction program generates actions when executed by at least one processor. The actions include: receiving a first higher layer signaling, where the first higher layer signaling is used to determine whether at least one DCI (Downlink Control Information) schedules a transmission waveform; and triggering a first PHR (Power Headroom Report) as a response to receiving the first higher layer signaling.

In one embodiment, the second communication device 410 comprises at least one processor and at least one memory. The at least one memory comprises computer program codes; the at least one memory and the computer program codes are configured to be used in collaboration with the at least one processor. The second communication device 410 at least transmits a first higher layer signaling, where the first higher layer signaling is used to indicate whether at least one DCI schedules a transmission waveform; herein, the first higher layer signaling is used for triggering a first PHR.

In one embodiment, the second communication device 410 comprises a memory that stores a computer readable instruction program. The computer readable instruction program generates an action when executed by at least one processor. The action includes: transmitting a first higher layer signaling, where the first higher layer signaling is used to indicate whether at least one DCI schedules a transmission waveform; herein, the first higher layer signaling is used for triggering a first PHR.

In one embodiment, the first communication device 450 corresponds to the first node in the present application.

In one embodiment, the second communication device 410 corresponds to the second node in the present application.

In one embodiment, the first communication device 450 is a UE, and the second communication device 410 is a base station.

In one embodiment, the antenna 452, the receiver 454, the multi-antenna receiving processor 458, the receiving processor 456, and the controller/processor 459 are used for receiving the first higher layer signaling.

In one embodiment, the antenna 452, the receiver 454, the multi-antenna receiving processor 458, the receiving processor 456, and the controller/processor 459 are used for monitoring the at least one DCI.

In one embodiment, the antenna 452, the transmitter 454, the multi-antenna transmitting processor 457, the transmitting processor 468, and the controller/processor 459 are used for transmitting the transmission waveform.

In one embodiment, the antenna 420, the transmitter 418, the multi-antenna transmitting processor 471, the transmitting processor 416, and the controller/processor 475 are used for transmitting the first higher layer signaling.

In one embodiment, the antenna 420, the transmitter 418, the multi-antenna transmitting processor 471, the transmitting processor 416, and the controller/processor 475 are used for transmitting the first DCI.

In one embodiment, the antenna 420, the receiver 418, the multi-antenna receiving processor 472, the receiving processor 470, and the controller/processor 475 are used for receiving the transmission waveform.

### Embodiment 5

Embodiment 5 illustrates a flowchart of transmission between a first node and a second node according to one embodiment of the present application, as shown in FIG. 5. In FIG. 5, the steps in box F1 and the steps in box F2 are optional, respectively.

The first node U1 receives a first higher layer signaling in step S101, where the first higher layer signaling is used to determine whether at least one DCI schedules a transmission waveform; and triggers a first PHR in step S102 as a response to receiving the first higher layer signaling; and in step S104, transmits a first PHR MAC CE as a response to a first condition set being satisfied;

the second node U2 transmits the first higher layer signaling in step S201, where the first higher layer signaling is used to indicate whether at least one DCI schedules a transmission waveform; and receives the first PHR MAC CE in step S203.

In Embodiment 5, the transmission waveform of the first PUSCH is one of a set of candidate waveforms, the set of candidate waveforms including DFT-S-OFDM and CP-OFDM; and the at least one DCI includes the first DCI; the first condition set comprises at least one PHR being triggered and not being terminated, the at least one PHR comprising the first PHR.

In one embodiment, the first condition set comprises that as a result of Logical Channel Prioritization (LCP), the allocated uplink resources are able to accommodate a MAC CE and a subheader for PHR.

In one embodiment, the act of transmitting a first PHR MAC CE comprises: obtaining from the physical layer the value of a Power Headroom (PH).

In one embodiment, the act of transmitting a first PHR MAC CE comprises: obtaining from the physical layer the value of a P_{CMAX,f,c} field, the P_{CMAX,f,c} being the maximum transmission power of the first node U1 on cell c.

In one embodiment, the act of transmitting a first PHR MAC CE comprises: obtaining from the physical layer the value of a Maximum Permissible Exposure (MPE) field.

In one embodiment, the act of transmitting a first PHR MAC CE comprises: instructing a Multiplexing and Assembly procedure to generate the first PHR MAC CE.

In one embodiment, the first PHR MAC CE is a Single Entry PHR MAC CE.

In one embodiment, the first PHR MAC CE is a Multiple Entry PHR MAC CE.

In one embodiment, the act of transmitting a first PHR MAC CE comprises: conveying the first PHR MAC CE having been generated from the MAC layer to the physical layer.

In one embodiment, a first node U1 receives a first DCI in step S 103; a second node U2 transmits the first DCI in step S202; herein, the first DCI is used to indicate a transmission waveform of at least a first PUSCH, and the first higher layer signaling is used to indicate that the at least one DCI schedules a transmission waveform; the transmission waveform of the first PUSCH is one of a set of candidate waveforms, the set of candidate waveforms including DFT-S-OFDM and CP-OFDM; and the at least one DCI includes the first DCI.

In one embodiment, the first DCI comprises scheduling information for the first PUSCH, the scheduling information comprising part of all of Time domain resource assignment (TDRA), Frequency domain resource assignment (FDRA), Modulation and coding scheme (MCS), Redundancy version (RV), or New data indicator (NDI).

In one subembodiment, the first DCI only indicates the transmission waveform of the first PUSCH.

In one embodiment, the first DCI includes scheduling information for the second PUSCH, the scheduling information including part or all of TDRA, FDRA, MCS, RV, or NDI.

In one embodiment, the second PUSCH and the first PUSCH are both on a first cell, and the second PUSCH is located before the first PUSCH in the time domain.

In one embodiment, the first PHR MAC CE is transmitted on the first PUSCH.

In one embodiment, the first node U1 receives a second higher layer signaling in step S100; and the second node U2 transmits the second higher layer signaling in step S200; herein, the second higher layer signaling comprises at least two parameter groups; the first higher layer signaling is used to indicate a first parameter group from the at least two parameter groups, the first parameter group being used for PHR.

In one embodiment, the second higher layer signaling is an RRC signaling.

In one embodiment, the second higher layer signaling includes a MAC CE.

In one embodiment, the second higher layer signaling is a Radio Resource Control (RRC) signaling.

In one embodiment, the second higher layer signaling belongs to a PUSCH-Config IE (Information Element).

In one embodiment, the second higher layer signaling belongs to the same BWP-UplinkDedicated IE as the first higher layer signaling.

In one embodiment, the second higher layer signaling belongs to the same BWP-Uplink IE as the first higher layer signaling.

In one embodiment, the second higher layer signaling belongs to the same ServingCellConfig IE as the first higher layer signaling.

In one embodiment, the first higher layer signaling is used to configure a first cell and the second higher layer signaling is used to configure a cell group to which the first cell belongs.

In one subembodiment, the first higher layer signaling belongs to a ServingCellConfig IE and the second higher layer signaling belongs to a MAC-CellGroupConfig IE.

In one subembodiment, the first higher layer signaling belongs to a BWP-UplinkDedicated IE, and the second higher layer signaling belongs to a MAC-CellGroupConfig IE.

In one embodiment, the cell group to which the first cell belongs is a Master Cell group (MCG).

In one embodiment, the cell group to which the first cell belongs is a Secondary Cell Group (SCG).

In one embodiment, each of the at least two parameter groups comprises at least part of fields in a PHR-Config IE.

In one embodiment, each of the at least two parameter groups is configured by a PHR-Config IE.

In one embodiment, each of the at least two parameter groups comprises a phr-PeriodicTimer.

In one embodiment, each of the at least two parameter groups comprises an mpe-Threshold.

The above two embodiments enable a flexible selection of the PHR-config parameter according to indications of the first higher layer signaling, and are particularly suitable for a more flexible PHR triggering and transmitting for a cell group.

In one embodiment, the first parameter group is used to indicate whether an MPE field is included in the first PHR MAC CE.

In one embodiment, the first parameter group is used to indicate whether the first PHR MAC CE is a single entry or a multiple entry PHR MAC CE.

In one embodiment, at least one of a search space to which the first DCI belongs or a DCI format of the first DCI is used to determine that the at least one DCI includes the first DCI.

In one embodiment, the first higher layer signaling is only used to configure part of a search space, and the first DCI is detected in the part of the search space.

In one embodiment, the first higher layer signaling is only used to configure part of DCI formats being used for Uplink Grant, the DCI format of the first DCI being one of the part of DCI formats being used for Uplink Grant.

In one embodiment, the first DCI is one of the at least one DCI only if it is detected in the part of the search space and its DCI format belongs to the part of DCI formats being used for Uplink Grant.

In one embodiment, the first higher layer signaling is used to determine whether each of the at least one DCI comprises a first field, the first field being used to schedule a transmission waveform; each of the at least one DCI comprises the first field when the first higher layer signaling is used to determine that at least one DCI schedules a transmission waveform, and each of the at least one DCI does not comprise the first field when the first higher layer signaling is used to determine that the at least one DCI does not schedule a transmission waveform.

In one embodiment, the first higher layer signaling is used to determine whether each of the at least one DCI comprises a first field, the first field being used to schedule a transmission waveform; each of the at least one DCI comprises the first field when the first higher layer signaling indicates dynamic scheduling of a transmission waveform, and each of the at least one DCI does not comprise the first field when the first higher layer signaling indicates no dynamic scheduling of a transmission waveform.

### Embodiment 6

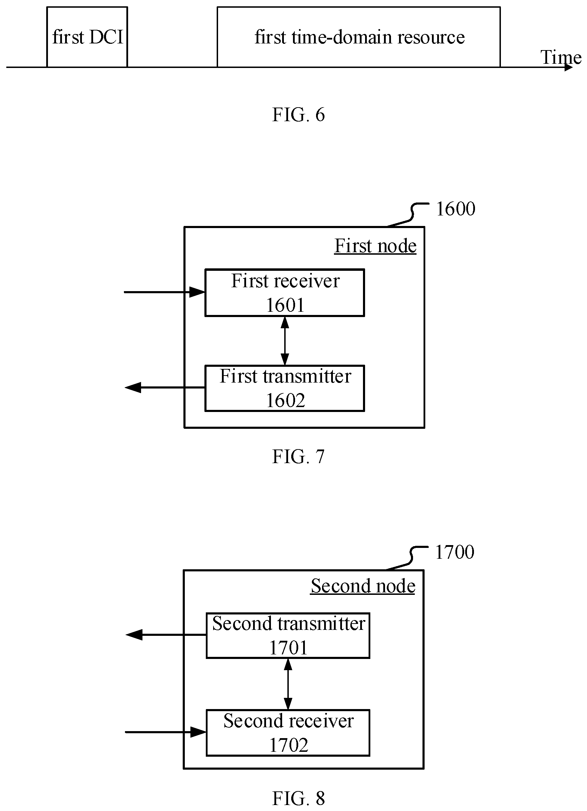

Embodiment 6 illustrates a schematic diagram of a first DCI according to one embodiment of the present application, as shown in FIG. 6.

In Embodiment 6, the first DCI is used to indicate a transmission waveform of at least a first PUSCH.

In one embodiment, the first PUSCH is on a first cell and the at least first PUSCH comprises a PUSCH on the first cell being scheduled by a DCI transmitted within a first time-domain resource.

In one embodiment, the DCI transmitted within the first time-domain resource comprises DCI format 0_0, DCI format 0_1 and DCI format 0_2.

In one embodiment, the DCI transmitted within the first time-domain resource comprises only DCI format 0_0.

In one embodiment, the first PUSCH is on a first cell and the at least first PUSCH comprises a PUSCH based on a configured grant being transmitted within a first time-domain resource.

In one embodiment, a DCI for scheduling the first PUSCH is transmitted in the first time-domain resource.

In one embodiment, the time-domain resource occupied by the first DCI is used to determine the first time-domain resource.

In one embodiment, the first time-domain resource starts at Q1 slots after a slot occupied by the first DCI, the Q1 being configurable or pre-determined.

In one embodiment, the first time-domain resource ends at Q2 slots after a slot occupied by the first DCI.

In one embodiment, an end time of the first time-domain resource is the effective time of an earliest DCI received after the first DCI for indicating a transmission waveform of a PUSCH on the first cell.

In one embodiment, the time-domain resource of a PUSCH scheduled by the first DCI is used to implicitly indicate a start time of the first time-domain resource.

### Embodiment 7

Embodiment 7 illustrates a structure block diagram of a processing device used in a first node according to one embodiment of the present application, as shown in FIG. 7. In FIG. 7, a processing device 1600 in a first node is comprised of a first receiver 1601 and a first transmitter 1602.

The first receiver 1601 receives a first higher layer signaling, where the first higher layer signaling is used to determine whether at least one DCI (Downlink Control Information) schedules a transmission waveform;
the first transmitter 1602 triggers a first PHR (Power Headroom Report) as a response to receiving the first higher layer signaling.

In one embodiment, the receiver 1601 receives a second higher layer signaling; herein, the second higher layer signaling comprises at least two parameter groups; the first higher layer signaling is used to determine a first parameter group from the at least two parameter groups, the first parameter group being used for PHR.

In one embodiment, the first transmitter 1602 transmits a first PHR MAC CE as a response to a first condition set being satisfied;

herein, the first condition set comprises at least one PHR being triggered and not being terminated, the at least one PHR comprising the first PHR.

In one embodiment, the first receiver 1601 receives a first DCI, the first DCI being used to indicate a transmission waveform of at least a first PUSCH;
herein, the first higher layer signaling is used to indicate that the at least one DCI schedules a transmission waveform; the transmission waveform of the first PUSCH is one of a set of candidate waveforms, the set of candidate waveforms including DFT-S-OFDM and CP-OFDM; and the at least one DCI includes the first DCI.

In one embodiment, at least one of a search space to which the first DCI belongs or a DCI format of the first DCI is used to determine that the at least one DCI includes the first DCI.

In one embodiment, the first higher layer signaling is used to determine whether the at least one DCI comprises a first field, the first field being used to schedule a transmission waveform.

In one embodiment, the first node 1600 is a UE.

In one embodiment, the first transmitter 1602 comprises at least one of the antenna 452, the transmitter/receiver 454, the multi-antenna transmitting processor 457, the transmitting processor 468, the controller/processor 459, the memory 460 or the data source 467 in FIG. 4 of the present application.

In one embodiment, the first transmitter 1602 comprises the antenna 452, the transmitter/receiver 454, the multi-antenna transmitting processor 457, the transmitting processor 468, the controller/processor 459, the memory 460 and the data source 467 in FIG. 4 of the present application.

In one embodiment, the first receiver 1601 comprises at least the first five of the antenna 452, the receiver 454, the multi-antenna receiving processor 458, the receiving processor 456, the controller/processor 459, the memory 460 and the data source 467 in FIG. 4 of the present application.

In one embodiment, the first receiver 1601 comprises at least the first four of the antenna 452, the receiver 454, the multi-antenna receiving processor 458, the receiving processor 456, the controller/processor 459, the memory 460 and the data source 467 in FIG. 4 of the present application.

In one embodiment, the first receiver 1601 comprises at least the first three of the antenna 452, the receiver 454, the multi-antenna receiving processor 458, the receiving processor 456, the controller/processor 459, the memory 460 and the data source 467 in FIG. 4 of the present application.

### Embodiment 8

Embodiment 8 illustrates a structure block diagram of a processing device used in a second node according to one embodiment of the present application, as shown in FIG. 8. In FIG. 8, a processing device 1700 in a second node is comprised of a second transmitter 1701 and a second receiver 1702.

The second transmitter 1701 transmits a first higher layer signaling, where the first higher layer signaling is used to indicate whether at least one DCI schedules a transmission waveform;
herein, the first higher layer signaling is used for triggering a first PHR.

In one embodiment, the second transmitter 1701 transmits a second higher layer signaling;
herein, the second higher layer signaling comprises at least two parameter groups; the first higher layer signaling is used to indicate a first parameter group from the at least two parameter groups, the first parameter group being used for PHR.

In one embodiment, the second receiver 1702 receives a first PHR MAC CE;
herein, as a response to a first condition set being satisfied, the first PHR MAC CE is generated; the first condition set comprises at least one PHR being triggered and not being terminated, the at least one PHR comprising the first PHR.

In one embodiment, the second transmitter 1701 transmits a first DCI, the first DCI being used to indicate a transmission waveform of at least a first PUSCH;
herein, the first higher layer signaling is used to indicate that the at least one DCI schedules a transmission waveform; the transmission waveform of the first PUSCH is one of a set of candidate waveforms, the set of candidate waveforms including DFT-S-OFDM and CP-OFDM; and the at least one DCI includes the first DCI.

In one embodiment, at least one of a search space to which the first DCI belongs or a DCI format of the first DCI is used to determine that the at least one DCI includes the first DCI.

In one embodiment, the first higher layer signaling is used to determine whether the at least one DCI comprises a first field, the first field being used to schedule a transmission waveform.

In one embodiment, the second node 1700 is a base station.

In one embodiment, the second transmitter 1701 comprises the antenna 420, the transmitter 418, the transmitting processor 416 and the controller/processor 475.

In one embodiment, the second transmitter 1701 comprises the antenna 420, the transmitter 418, the multi-antenna transmitting processor 471, the transmitting processor 416 and the controller/processor 475.

In one embodiment, the second transmitter 1701 comprises the antenna 420, the transmitter 418, the transmitting processor 416 and the controller/processor 475.

In one embodiment, the second transmitter 1701 comprises the antenna 420, the transmitter 418, the multi-antenna transmitting processor 471, the transmitting processor 416 and the controller/processor 475.

In one embodiment, the second receiver 1702 comprises the antenna 420, the receiver 418, the multi-antenna receiving processor 472, the receiving processor 470, and the controller/processor 475.

In one embodiment, the second receiver 1702 comprises the controller/processor 475.

The ordinary skill in the art may understand that all or part of steps in the above method may be implemented by instructing related hardware through a program. The program may be stored in a computer readable storage medium, for example Read-Only-Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The present application is not limited to any combination of hardware and software in specific forms. The UE and terminal in the present application include but are not limited to unmanned aerial vehicles, communication modules on unmanned aerial vehicles, telecontrolled aircrafts, aircrafts, diminutive airplanes, mobile phones, tablet computers, notebooks, vehicle-mounted communication equipment, wireless sensor, network cards, terminals for Internet of Things (IOT), RFID terminals, NB-IOT terminals, Machine Type Communication (MTC) terminals, enhanced MTC (eMTC) terminals, data cards, low-cost mobile phones, low-cost tablet computers, etc. The base station or system device in the present application includes but is not limited to macro-cellular base stations, micro-cellular base stations, home base stations, relay base station, gNB (NR node B), Transmitter Receiver Point (TRP), and other radio communication equipment.

It will be appreciated by those skilled in the art that this disclosure can be implemented in other designated forms without departing from the core features or fundamental characters thereof. The currently disclosed embodiments, in any case, are therefore to be regarded only in an illustrative, rather than a restrictive sense. The scope of invention shall be determined by the claims attached, rather than according to previous descriptions, and all changes made with equivalent meaning are intended to be included therein.

## Claims

1. A first node for wireless communications, comprising:
a first receiver, receiving a first higher layer signaling, where the first higher layer signaling is used to determine whether at least one DCI (Downlink Control Information) schedules a transmission waveform; and
a first transmitter, triggering a first PHR (Power Headroom Report) as a response to receiving the first higher layer signaling.

2. The first node according to claim 1, **characterized in** comprising:
the first receiver, receiving a second higher layer signaling;
wherein the second higher layer signaling comprises at least two parameter groups; the first higher layer signaling is used to determine a first parameter group from the at least two parameter groups, the first parameter group being used for PHR.

3. The first node according to claim 1 or 2, **characterized in** comprising:
the first transmitter, transmitting a first PHR MAC CE as a response to a first condition set being satisfied;
wherein the first condition set comprises at least one PHR being triggered and not being terminated, the at least one PHR comprising the first PHR.

4. The first node according to any of claims 1-3, **characterized in** comprising:
the first receiver, receiving a first DCI, the first DCI being used to indicate a transmission waveform of at least a first PUSCH (Physical Uplink Shared Channel);
wherein the first higher layer signaling is used to indicate that the at least one DCI schedules a transmission waveform; the transmission waveform of the first PUSCH is one of a set of candidate waveforms, the set of candidate waveforms including DFT-S-OFDM and CP-OFDM; and the at least one DCI includes the first DCI.

5. The first node according to claim 4, **characterized in that** at least one of a search space to which the first DCI belongs or a DCI format of the first DCI is used to determine that the at least one DCI includes the first DCI.

6. The first node according to any of claims 1-5, **characterized in that** the first higher layer signaling is used to determine whether the at least one DCI comprises a first field, the first field being used to schedule a transmission waveform.

7. A second node for wireless communications, comprising:
a second transmitter, transmitting a first higher layer signaling, where the first higher layer signaling is used to indicate whether at least one DCI schedules a transmission waveform;
wherein the first higher layer signaling is used to trigger a first PHR.

8. The second node according to claim 7, **characterized in** comprising:
the second transmitter, transmitting a second higher layer signaling;
wherein the second higher layer signaling comprises at least two parameter groups; the first higher layer signaling is used to indicate a first parameter group from the at least two parameter groups, the first parameter group being used for PHR.

9. The second node according to claim 7 or 8, **characterized in** comprising:
a second receiver, receiving a first PHR MAC CE;
wherein as a response to a first condition set being satisfied, the first PHR MAC CE is generated; the first condition set comprises at least one PHR being triggered and not being terminated, the at least one PHR comprising the first PHR.

10. The second node according to any of claims 7-9, **characterized in** comprising:
the second transmitter, transmitting a first DCI, the first DCI being used to indicate a transmission waveform of at least a first PUSCH;
wherein the first higher layer signaling is used to indicate that the at least one DCI schedules a transmission waveform; the transmission waveform of the first PUSCH is one of a set of candidate waveforms, the set of candidate waveforms including DFT-S-OFDM and CP-OFDM; and the at least one DCI includes the first DCI.

11. The second node according to claim 10, **characterized in that** at least one of a search space to which the first DCI belongs or a DCI format of the first DCI is used to determine that the at least one DCI includes the first DCI.

12. The second node according to any of claims 7-11, **characterized in that** the first higher layer signaling is used to determine whether the at least one DCI comprises a first field, the first field being used to schedule a transmission waveform.

13. A method in a first node for wireless communications, comprising:
receiving a first higher layer signaling, where the first higher layer signaling is used to determine whether at least one DCI (Downlink Control Information) schedules a transmission waveform; and
triggering a first PHR (Power Headroom Report) as a response to receiving the first higher layer signaling.

14. The method in the first node according to claim 13, **characterized in** comprising:
receiving a second higher layer signaling;
wherein the second higher layer signaling comprises at least two parameter groups; the first higher layer signaling is used to determine a first parameter group from the at least two parameter groups, the first parameter group being used for PHR.

15. The method in the first node according to claim 13 or 14, **characterized in** comprising:
transmitting a first PHR MAC CE as a response to a first condition set being satisfied;
wherein the first condition set comprises at least one PHR being triggered and not being terminated, the at least one PHR comprising the first PHR.

16. The method in the first node according to any of claims 13-15, **characterized in** comprising:
receiving a first DCI, the first DCI being used to indicate a transmission waveform of at least a first PUSCH (Physical Uplink Shared Channel);
wherein the first higher layer signaling is used to indicate that the at least one DCI schedules a transmission waveform; the transmission waveform of the first PUSCH is one of a set of candidate waveforms, the set of candidate waveforms including DFT-S-OFDM and CP-OFDM; and the at least one DCI includes the first DCI.

17. The method in the first node according to claim 16, **characterized in that** at least one of a search space to which the first DCI belongs or a DCI format of the first DCI is used to determine that the at least one DCI includes the first DCI.

18. The method in the first node according to any of claims 13-17, **characterized in that** the first higher layer signaling is used to determine whether the at least one DCI comprises a first field, the first field being used to schedule a transmission waveform.

19. A method in a second node for wireless communications, comprising:
transmitting a first higher layer signaling, where the first higher layer signaling is used to indicate whether at least one DCI schedules a transmission waveform;
wherein the first higher layer signaling is used to trigger a first PHR.

20. The method in the second node according to claim 19, **characterized in** comprising:
transmitting a second higher layer signaling;
wherein the second higher layer signaling comprises at least two parameter groups; the first higher layer signaling is used to indicate a first parameter group from the at least two parameter groups, the first parameter group being used for PHR.

21. The method in the second node according to claim 19 or 20, **characterized in** comprising:
receiving a first PHR MAC CE;
wherein as a response to a first condition set being satisfied, the first PHR MAC CE is generated; the first condition set comprises at least one PHR being triggered and not being terminated, the at least one PHR comprising the first PHR.

22. The method in the second node according to any of claims 19-21, **characterized in** comprising:
transmitting a first DCI, the first DCI being used to indicate a transmission waveform of at least a first PUSCH;
wherein the first higher layer signaling is used to indicate that the at least one DCI schedules a transmission waveform; the transmission waveform of the first PUSCH is one of a set of candidate waveforms, the set of candidate waveforms including DFT-S-OFDM and CP-OFDM; and the at least one DCI includes the first DCI.

23. The method in the second node according to claim 22, **characterized in that** at least one of a search space to which the first DCI belongs or a DCI format of the first DCI is used to determine that the at least one DCI includes the first DCI.

24. The method in the second node according to any of claims 19-23, **characterized in that** the first higher layer signaling is used to determine whether the at least one DCI comprises a first field, the first field being used to schedule a transmission waveform.
